# EUROPEAN PATENT SPECIFICATION

(11) **EP 1 067 093 B1**
(45) Date of publication and mention of the grant of the patent: **15.12.2004**
(21) Application number: 00600009.5
(22) Date of filing: 07.07.2000
(51) Int. Cl.: C01C 1/248, C01C 1/24, C01C 1/242

(54) **Method for the preparation of granular ammonium sulphate**
Verfahren zur Herstellung von granuliertem Ammoniumsulfat
Procédé pour la préparation de sulfate d'ammonium granulé

(30) Priority: 07.07.1999 GR 99100232
(43) Date of publication of application: 10.01.2001
(73) Proprietor: Biomihania Fosforikon Lipasmaton A.E., 651 10 Kabala (GR)
(72) Inventor: Bellis, D., Biomihania Fosforikon Lipasmaton AE, 54110 Thessaloniki (GR)
(74) Representative: Skoulariki, Kalliopi

(56) References cited:
- WO-A-93/19826
- GB-A- 2 116 159
- US-A- 3 351 455
- US-A- 3 464 809
- ED. H.J. ARPE: "Ullmann's encyclopedia of industrial chemistry, 4th Edition, volume 7, pages 514 and 521-525" 1974 , VCH-VERLAG , WEINHEIM (DE) XP002132376 * paragraph 2.3 * * paragraph 2.2.1 *

## Description

The invention relates to a method for the production of ammonium sulphate and to the resulting product, which is granular, free-flowing and non-agglomerating.
Briefly the method is using as equipment a classic reaction tank followed by a tubular reactor, while the raw materials are being fed in both apparatus. The product produced by this method has a minimum title of 20.5% by weight, and a granular composition and hardness similar to that of ordinary fertilisers.

Ammonium sulphate has many applications, the most important being in the manufacture of fertiliser, for which it is a source of nitrogen (ammonium) and sulphur. Crystalline ammonium sulphate can be prepared in many ways, both as a by-product and as the primary product of the reaction between sulphuric acid and ammonia. It is very frequently used in blends with other types of fertilisers. Crystalline ammonium sulphate, however, has a number of major drawbacks, including the fact that its grains are small in size and irregular in shape, do not flow easily, have a tendency to agglomerate and are lacking in hardness. This makes it difficult to use as a fertiliser, given that fertilisers require uniformity of dispersion and specific grain properties (shape - dimensions).
A comprehensive review of the methods of ammonium sulphate production and allusions for its granulation and uses are presented in the "Ullmann's encyclopedia of industrial chemistry,(4^{th}Edition, volume 7, pages 521-5), published by VCH-Verlag, Germany (1974)". In this publication, the main way for producing ammonium sulphate is to receive it necessarily as a by-product, or by neutralising either ammonia gas or sulphuric acid. The crystals of the salt are obtained through a crystallizer. However the (through granulation) obtained particles appear to have a size between 0.5 and 2mm, which isn't the today desired granulometry. Also the described method needs a pH-value of about 3 in order to obtain the above mentioned granulometry, which forces the producer either to select special equipment material or to accept high rates of corrosion.
Numerous attempts have been made to reduce these defects by improving the crystallisation process. One such way is the use of a reverse-flow crystallisation process, in which the small crystals that are formed at low temperatures are mixed with a hot solution of ammonium sulphate or acidic ammonium sulphate. While there is an improvement in the crystalline ammonium sulphate thus produced, the production cost is high and, in addition, the grains are irregular in shape and dimensions, making them difficult to use as fertiliser.
Further improvements in the product were achieved with the use of granulation techniques, yielding a granular product, enhanced in certain cases with the use of additives, such as a variety of metallic ions, phosphoric acid, phosphorites, urea, ammonium nitrate and other compounds. While these techniques have brought about further improvements, existing methods nonetheless still produce a granular product of little hardness and with a substantial percentage of grains outside the desired size range (2-4.5 mm).
A different point of view is shown in the patent GB 2116159A (TOYO ENGINEERING CORP.- MITSUI TOATSU CHEMICALS) from 28.9.1983, which describes the manufacture of NPK fertilisers through the use of a tubular reactor followed by a reaction tank (just the opposite combination as our method) and a fluidised bed granulator. The outcoming slurry has a temperature of 80-130°C and a liquid content of 40-90% by volume.However this method -as described- has been tested only for low production rates.
From the technical standpoint, all granular ammonium sulphate production methods present problems of corrosion of the material of the installations used, because of the low pH of the liquor produced during the reaction. Furthermore, none of the occasional improvements that have been achieved have brought about any substantial increase in production rates.
This invention eliminates the above drawbacks and creates a series of advantages, which are analysed below. The main feature of this invention is the combination in series of a agitated cylindrical reaction tank followed by a tubular reactor, and the primary gain is the increase in production rate in comparison with the use of just one of the above machines. In addition, the extensive use of recycled water, either from the stripping of tail gases or from other factory units, allows the liquor produced in the reactor to be kept at a fairly low density, moderating the quantities of ammonia channelled into the tail gas stripping system, while finally, given the relatively high (compared to other methods) pH of the liquor, there is no corrosion of the reaction tank.

As we have said, the production of granular ammonium sulphate is carried out in two successive stages, which are shown in diagrams N°1 and N°2, attached.
In the first stage, ammonia (liquid or gas), sulphuric acid of at least 70% concentration by weight and recycled water from the stripping of tail gases are fed into a reaction tank fitted with co-axial agitators. Alternatively, two agitation tanks in series may be used. The reaction temperature is 100-120°C, with a usual value of 108-115°C, and the pressure is normal atmospheric pressure. The water added is acidic because of the presence of acidic ammonium sulphate. The reaction tank is made of steel with an acid-resistant lining. The liquor produced has a moisture level of 34-42%, a density of 1260-1430 g/l with a usual value of 1290-1370 g/l, and a pH of 2.5 - 6 with a usual value of 3- 5.
From the overflow of the tank, the liquor produced flows into an agitated intermediate vessel, to which may be added liquid effluents from other parts of the plant. From the intermediate vessel, the liquor produced in the first stage is first mixed with the rest of the sulphuric acid of the reaction and then pumped into the tubular reactor. To the tubular reactor are also added water and ammonia, in either liquid or gaseous form. The pressure is 3-6 bar, usually 3.5-5 bar, and the temperature is over 130°C. The liquor that is projected from the tubular reactor into the rotating granulator has a moisture level of 5-12% after expansion. To the granulator is also added a small quantity of ammonia (liquid or gas) to complete the reaction. The pH of the product in the granulator, measured in a 1% solution by weight, is 3-5, with a usual value of 3.2-4.5, and the moisture level is 2-4.5%.
The tail gases from the reaction tank and the granulator are conducted into 2 stripping columns, where the ammonia is neutralised and absorbed by recycled water and sulphuric acid. The acidic ammonium sulphate solution produced is fed into the reaction tank and the tubular reactor instead of plain recycled water.
In both stages of preparation the proper feeding of raw materials and water is very important. This must be done as follows:
- Sulphuric acid : Discounting the acid from the stripping process, the remainder is fed into the reaction tank and the tubular reactor at a desired proportion of 45-55% respectively. In total 31-45% may be fed into the tank, 42-52% into the tubular reactor and 10-20% into the vessels where, mixed with recycled water, it is fed into the stripping columns to capture the ammonia.
- Ammonia : The ammonia is fed in equal quantities into the reaction tank and the tubular reactor. Specifically, 37-55% of the total ammonia is consumed in the reaction tank, 42-52% in the tubular reactor and 3-11% in the granulator.
- Acidic solution from stripping columns : As we have already mentioned, recycled water is fed into the vessels, where it is mixed with part of the sulphuric acid and then used to strip the tail gases. Of the resulting solution 5-11% is fed into the tubular reactor and the rest into the reaction tank.

After granulation the product undergoes a series of processes to give it its final form; these are as follows :
◆ Drying in a rotary oven with a concurrent flow of exhaust gases from the combustion of natural gas (or diesel oil). The temperature of the exhaust gas at the entrance to the drying oven is 440-480°C, and may rise to 500°C, while the fertiliser exits at 95-110°C, with a usual value of 98-105°C.
◆ Sieving, in two stages, when the fine grains are returned to the granulator and the coarse ones sent for crushing, while the marketable grains (2-4.5 mm) move on to the cooling stage.
◆ Crushing of coarse grains, which are then returned to the granulator
◆ Cooling, with (cold) atmospheric air in a solid-fluid bed to a final temperature of 10-45°C (depending on climate conditions), and simultaneous dust removal.
◆ Coating with some suitable material, to keep the grains from agglomerating; this is done in a rotating drum called a coater.

The final product produced by the above method has the following chemical properties:
■ Nitrogen content : minimum 20.5% by weight, entirely in ammoniac form, using the method of analysis described in directive 77/535/EEC, Method 2.1.
■ Sulphur content : minimum 23% by weight, using the method of analysis described in directive 89/519/EEC, Method 8.4, 8.9.
■ Free moisture : maximum 0.3% by weight, measured by the ISO 8189 method.
■ pH : between 3.2 and 4.5 , measured in an aqueous solution 1% by weight.

Similarly, the physical properties of the final product produced by the above method are as follows :
• Form : granular, free-flowing, non-agglomerating
• Granulometry : 90% by weight minimum between 2 and 4.5 mm, and
: specifically

| | |
|---|---|
| > 4.5 mm | 0.3% by weight maximum |
| 4.5 mm - 4 mm | 1-3% by weight |
| 4 mm - 2 mm | 87-95% by weight |
| < 2 mm | 5-9% by weight |

according to the Pr EN 1236 method (ISO 8397 modified)
• Hardness :
- Average value :: 3 kg minimum, and usually more than 4 kg
- Maximum value :: 5 kg at least, and usually more than 5.5 kg
- Minimum value :: 2 kg at least, and usually more than 3 kg
determined on a sample of at least 10 grains with a diameter of between 3.15 and 4 mm by measurement of the necessary applied weight to crush each grain.
• SGN (size guide number): 200-300
as determined by the formula: SGN = d₅₀ x 100, where d₅₀ is the diameter of 50% of the grains according to the cumulative distribution of the granulometric analysis.
• UI (uniformity index): 50-55
as determined by the formula: UI = (d₅ / d₉₀) x 100, where d₅, d₉₀ are the diameters of 5% and 90% of the grains respectively, according to the cumulative distribution of the granulometric analysis.
• Tendency to agglomerate : 0.3 kg at most (usually 0 kg)
determined by an original method which measures the applied weight necessary to crush a sample of 30 grams of product that has been centrifuged at 4500 rpm for 4 hours and then left to rest for another 4 hours. The method is repeated once, and the final value is the average of the two results.

The advantages of this invention are many and varied. The direct and obvious advantage lies in the properties of the product itself, which has grains of uniform size (as demonstrated by the granulometric analysis, the SGN and the UI) and appropriate hardness (as demonstrated by the hardness index) that do not agglomerate.
There are in addition, however, a number of secondary advantages, relating to the production process. These are :
1. Full use of recycled water. Since the method requires large quantities of water to produce a reaction liquor of the desired low density, this permits the recycling of various liquid effluents not only from the production unit itself but from other parts of the plant and even from other factories. This has a twofold significance, since on the one hand it reduces the quantity of liquid effluents released into the final liquid receptor and on the other it reduces ammonia losses into the atmosphere.
2. Minimalisation of the corrosion of the reaction tank. The consequence of the low density of the liquor in the reaction tank and the capturing of gaseous ammonia in the stripping process, which is then returned to the reaction tank, is a higher pH than in other methods. This not only results in less chemical corrosion but at the same time prevents mechanical erosion, on the one hand because the higher pH prevents crystallisation and on the other because of the fact that the liquor is thinner than in traditional methods.
3. Use of smaller granulator. Since most of the gases created are captured by the reaction tank, the volume of gas in the granulator is less than in traditional methods. Thus in a new unit applying this process the granulator could be significantly smaller than in a traditional unit of the same capacity.
4. Increased production in existing units, as a consequence of advantage number 3. In the unit of our company the production rate using this method rose from 35 t/h to 65 t/h, for a period of 72 hours of continuous operation. This rate of production may be expected for a single production line and for a total consumption of electricity of 30-40 kWh/t of product or 1800-2200 kWh/hour of operation.

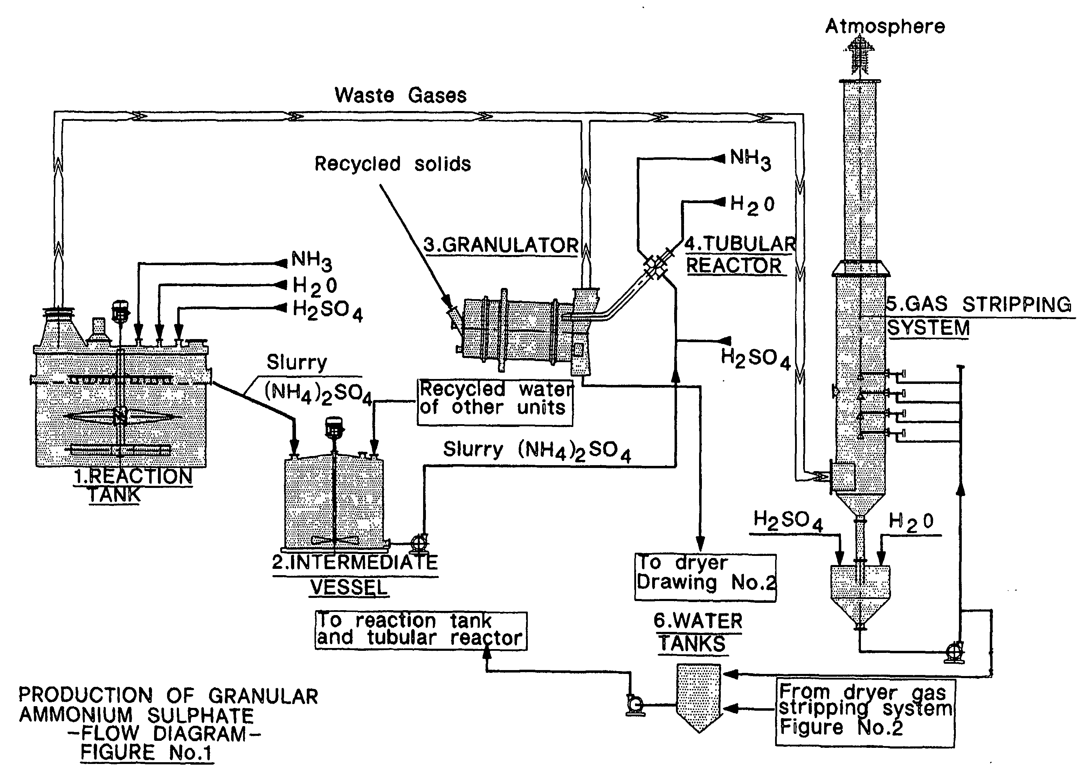

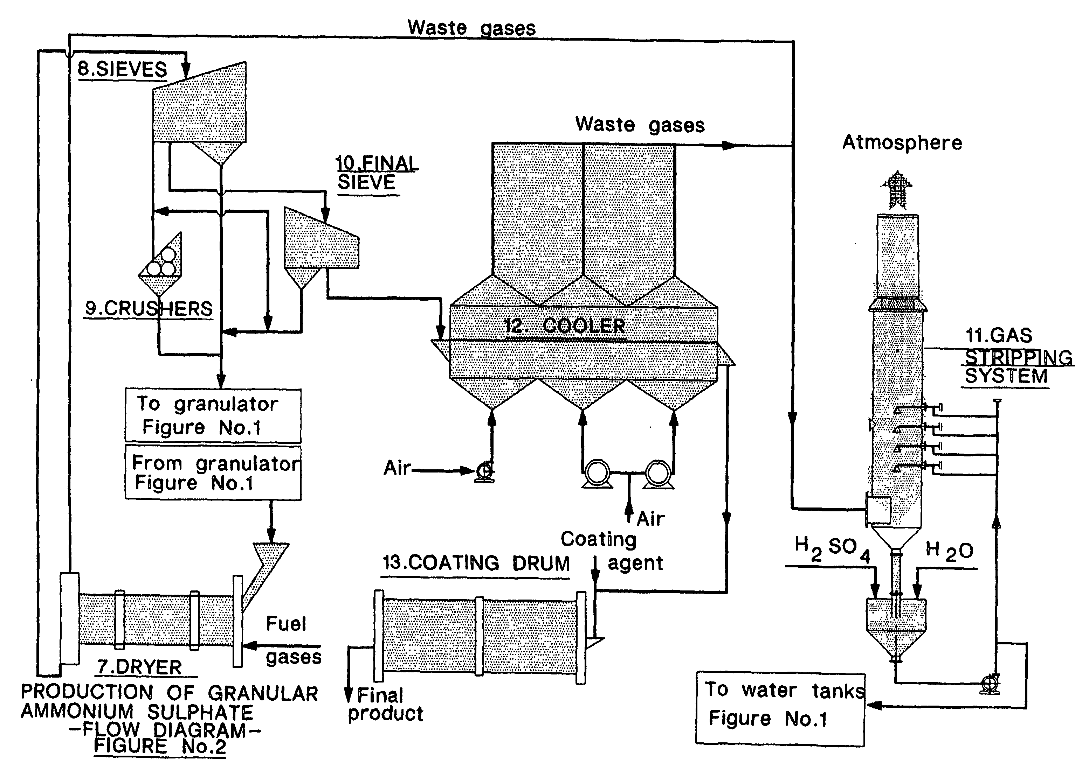

The two figures below show in sequence the simplified flow chart of a compound fertiliser production unit that applies the method described above for the production of granular ammonium sulphate. Figure N°1 shows the standard reaction tank (1), the intermediate vessel (2), the granulator (3), the tubular reactor (4), the gas stripping system (5) and the water reservoirs (6). Figure N°2 shows the drying oven (7), the sieves (8), the crushers (9), the final sieve (10), the gas-stripping, drying and cooling system (11), the cooler (12) and the coater (13). The diagrams do not show various machines for the propulsion of solids, liquids and gases, which are not characteristic of the production installation for this product, while the arrangement of the machines as given on the diagrams is not binding and may differ in a real installation. Finally, these diagrams may in no sense be considered working drawings for the forms of the machines in question.

Presented below are three examples of the application of this invention, which however must be taken as merely indicative and not be considered as defining the precise limits of the present invention.

### 1^{st} EXAMPLE

**a) Production rate : 40-60 t/h**
**b)Operational conditions :**
Sulfuric acid concentration : 96,4% b.w.

| **N° of sample** | **Reaction temperature (°C)** | **Liquor density (g/l)** | **Liquor pH** | **Tubular reactor pressure** | **Tub. reactor temperature (°C)** | **Granulator pH (1%b.w)** | **Fuel gases temper. (dryer inlet)(°C)** | **Fuel gases temper. (dryer outlet)(°C)** | **Product tem. (cooler outlet) (°C)** |
|---|---|---|---|---|---|---|---|---|---|
| 1 | 105,9 | 1313 | 2,7 | 4,1 | 153 | 4,0 | 460 | 108 | |
| 2 | 112,4 | 1322 | 2,8 | 3,7 | 150 | 3,8 | 480 | 102 | |
| 3 | 112,2 | 1333 | 3,7 | 4,4 | 154 | 4,0 | 444 | 102 | 18 |
| 4 | 113,3 | 1317 | 2,7 | 4,7 | 157 | 4,1 | 452 | 108 | |
| 5 | 113,3 | 1314 | 2,6 | 4,8 | 158 | 4,0 | 452 | 109 | |
| 6 | 112,9 | 1306 | 3,5 | 4,9 | 159 | 3,9 | 450 | 109 | |
| 7 | 110,8 | 1313 | 5,6 | 4,4 | 155 | 4,0 | 455 | 109 | 22 |
| 8 | 110,5 | 1315 | 4,6 | 4,3 | 154 | 3,8 | 443 | 109 | |
| 9 | 111,1 | 1314 | 2,6 | 4,4 | 154 | 3,9 | 499 | 107 | 20 |
| 10 | 112,6 | 1303 | 3,8 | 4,6 | 156 | 4,2 | 472 | 105 | |
| 11 | 111,6 | 1310 | 4,9 | 4,5 | 156 | 4,5 | 482 | 102 | |

**c) Feeding proportions (%)**

| | **Sulfuric acid** | | | **Ammonia** | | | **Water** | |
|---|---|---|---|---|---|---|---|---|
| **N° of sample** | **Reaction tank** | **Tubular reactor** | **stripping columns** | **Reaction tank** | **Tubular reactor** | **Granulator** | **Reaction tank** | **Tubular reactor** |
| 1 | 35 | 47 | 18 | 40 | 50 | 10 | 92 | 8 |
| 2 | 36 | 47 | 17 | 39 | 49 | 12 | 94 | 6 |
| 3 | 36 | 46 | 18 | 42 | 50 | 8 | 91 | 9 |
| 4 | 37 | 48 | 15 | 44 | 51 | 5 | 91 | 9 |
| 5 | 36 | 49 | 15 | 43 | 50 | 7 | 92 | 8 |
| 6 | 37 | 49 | 14 | 44 | 50 | 6 | 91 | 9 |
| 7 | 36 | 49 | 15 | 42 | 50 | 8 | 94 | 6 |
| 8 | 37 | 48 | 15 | 41 | 52 | 7 | 91 | 9 |
| 9 | 35 | 48 | 17 | 41 | 50 | 9 | 91 | 9 |
| 10 | 36 | 50 | 14 | 43 | 51 | 6 | 90 | 10 |
| 11 | 37 | 49 | 14 | 43 | 51 | 6 | 91 | 9 |

**d) Chemical - physical properties of product**

| **N° of sample** | **Nitrogen cont.(%b.w.)** | **Sulfur cont(%b.w.)** | **Free molst. (%b.w.)** | **pH 1%b.w**. | **Granulom. (%b.w.)*1** | **Hardness (%b.w.)*2** | **SGN** | **UI** | **Tendency to agglomerate (kg)** |
|---|---|---|---|---|---|---|---|---|---|
| 1 | 20,55 | | 0,12 | | | | | | |
| 2 | 20,55 | | 0,12 | 4,1 | 0,3-1,4-90,7-7,6 | 4-5,7-3 | 282 | 50 | 0 |
| 3 | 20,56 | 23,27 | 0,16 | | | | | | |
| 4 | 20,53 | | 0,12 | 3,8 | 0,5-2,9-89,6-7,0 | 4,2-5,2-2,7 | 288 | 50 | 0 |
| 5 | 20,53 | | 0,07 | | | | | | |
| 6 | 20,48 | 23,18 | 0,09 | 3,9 | 0,1-1,2-88,8-9,9 | 4,3-5,6-2,9 | 282 | 49 | |
| 7 | 20,58 | | 0,10 | | | | | | |
| 8 | 20,47 | | 0,18 | 4,0 | 0-2,2-89,7-8,1 | 6,4-9,3-4,0 | 284 | 50 | 0 |
| 9 | 20,52 | 23,23 | 0,10 | | | | | | |
| 10 | 20,49 | | 0,09 | 4,4 | 0-1,7-87,8-10,5 | 7,3-10,1-5,2 | 281 | 50 | 0 |
| 11 | 20,57 | | 0,11 | | | | | | |

### 2^{nd} EXAMPLE

**a) Production rate : 50 t/h**
**b) Operational conditions :**
Sulfuric acid concentration : 96,6% b.w.

| **N° of sample** | **Reaction temperature (°C)** | **Liquor density (g/l)** | **Liquor pH** | **Tubular reactor pressure** | **Tub. reactor temperature (°C)** | **Granulator pH (1%b.w)** | **Fuel gases temper. (dryer inlet)(°C)** | **Fuel gases temper. (dryer outlet)(°C)** | **Product term. (cooler outlet) (°C)** |
|---|---|---|---|---|---|---|---|---|---|
| 1 | 111,0 | 1365 | 3,5 | 4,0 | 152 | 4,1 | 461 | 99 | |
| 2 | 110,7 | 1353 | 4,1 | 4,1 | 153 | 4,1 | 459 | 100 | |
| 3 | 110,7 | 1332 | 4,2 | 4,1 | 153 | 4,5 | 482 | 99 | 15 |
| 4 | 112,1 | 1333 | 3,7 | 4,1 | 153 | 4,4 | 481 | 99 | |
| 5 | 112,3 | 1330 | 2,6 | 3,9 | 151 | 4,4 | 497 | 95 | |
| 6 | 111,9 | 1320 | 2,7 | 3,9 | 151 | 4,1 | 498 | 101 | |
| 7 | 110,8 | 1314 | 3,9 | 4,0 | 152 | 4,3 | 476 | 98 | |
| 8 | 112,2 | 1321 | 3,4 | 3,9 | 151 | 4,3 | 485 | 98 | 15 |
| 9 | 111,8 | 1329 | 3,6 | 3,8 | 151 | 4,2 | 472 | 98 | |
| 10 | 112.3 | 1313 | 3,9 | 3,8 | 151 | 4,0 | 437 | 99 | 18 |
| 11 | 111.5 | 1317 | 3,9 | 4,3 | 154 | 4,4 | 443 | 101 | |
| 12 | 112,1 | 1330 | 3,3 | 4,2 | 153 | 4,2 | 482 | 99 | |
| 13 | 112.2 | 1335 | 2,9 | 4,0 | 152 | 3,9 | 497 | 100 | |
| 14 | 112,0 | 1307 | 2,7 | 4,0 | 152 | 4,0 | 496 | 101 | |
| 15 | 112,1 | 1324 | 2,9 | 4,1 | 153 | 3,9 | 484 | 101 | |

**c) Feeding proportions (%)**

| | **Sulfuric acid** | | | **Ammonia** | | | **Water** | |
|---|---|---|---|---|---|---|---|---|
| **N° of sample** | **Reaction tank** | **Tubular reactor** | **Stripping columns** | **Reaction tank** | **Tubular reactor** | **Granulator** | **Reaction tank** | **Tubular reactor** |
| 1 | 35 | 46 | 19 | 43 | 48 | 9 | 92 | 8 |
| 2 | 36 | 46 | 18 | 46 | 49 | 5 | 89 | 11 |
| 3 | 36 | 46 | 18 | 44 | 48 | 8 | 91 | 9 |
| 4 | 36 | 46 | 18 | 43 | 50 | 7 | 91 | 9 |
| 5 | 36 | 46 | 18 | 45 | 49 | 6 | 90 | 10 |
| 6 | 36 | 46 | 18 | 45 | 48 | 7 | 92 | 8 |
| 7 | 36 | 46 | 18 | 44 | 50 | 6 | 92 | 8 |
| 8 | 36 | 46 | 18 | 45 | 49 | 6 | 92 | 8 |
| 9 | 36 | 46 | 18 | 45 | 49 | 6 | 92 | 8 |
| 10 | 36 | 46 | 18 | 46 | 50 | 4 | 88 | 12 |
| 11 | 36 | 46 | 18 | 44 | 49 | 7 | 90 | 10 |
| 12 | 36 | 46 | 18 | 45 | 48 | 7 | 91 | 9 |
| 13 | 36 | 46 | 18 | 44 | 48 | 8 | 92 | 8 |
| 14 | 35 | 47 | 18 | 45 | 48 | 7 | 92 | 8 |
| 15 | 35 | 47 | 18 | 44 | 48 | 8 | 92 | 8 |

**d) Chemical - physical properties of product**

| **N° of sample** | **Nitrogen cont.(%b.w.)** | **Sulfur cont.(%b.w.)** | **Free moist. (%b.w.)** | **pH 1%b.w.** | **Granulom. (%b.w.)*1** | **Hardness (%b.w.)*2** | **SGN** | **UI** | **Tendency to agglomerate (kg)** |
|---|---|---|---|---|---|---|---|---|---|
| 1 | 20,55 | | 0,06 | | | | | | |
| 2 | 20,55 | | 0,08 | 3,6 | 0,3-2,9-88,1-8,7 | 5,0-5,9-3,7 | 261 | 54 | 0 |
| 3 | 20,46 | 23,36 | 0,09 | | | | | | |
| 4 | 20,59 | | 0,09 | | | | | | |
| 5 | 20,60 | | 0,11 | 4,7 | 0-2,5-89,8-7,7 | 5,5-9,1-3,8 | 268 | 52 | 0 |
| 6 | 20,55 | 23,43 | 0,08 | | | | | | |
| 7 | 20,52 | | 0,07 | | | | | | |
| 8 | 20,53 | | 0,09 | 4,7 | 0-2,2-87,9-9,9 | 4,9-5,7-4,3 | 286 | 50 | 0 |
| 9 | 20,57 | 23,46 | 0,10 | | | | | | |
| 10 | 20,59 | | 0,07 | | | | | | |
| 11 | 20,52 | | 0,09 | 3,6 | 0-1,3-88,0-10,7 | 5,0-5,8-4,0 | 282 | 50 | 0 |
| 12 | 20,55 | 23,50 | 0,09 | | | | | | |
| 13 | 20,55 | | 0,09 | | | | | | |
| 14 | 20,52 | 23,60 | 0,09 | 4,3 | 0,1-2,3-91,1-6,5 | - | 281 | 53 | |
| 15 | 20,58 | | 0,09 | | | | | | |

### 3^{rd} EXAMPLE

**a) Production rate : 55-65 t/h**
**b)Operational conditions :**
Sulfuric acid concentration : 96,9% b.w.

| **N° of sample** | **Reaction temperature (°C)** | **Liquor density (g/l)** | **Liquor pH** | **Tubular reactor pressure** | **Tub. reactor temperature (°C)** | **Granulator pH (1%b.w)** | **Fuel gases temper. (dryer inlet)(°C)** | **Fuel gases temper. (dryer outlet)(°C)** | **Product tem. (cooler outlet) (°C)** |
|---|---|---|---|---|---|---|---|---|---|
| 1 | 113,5 | 1326 | 2,4 | 4,5 | 156 | 3,8 | 465 | 104 | |
| 2 | 112.6 | 1328 | 2,7 | 4,2 | 153 | 4,1 | 428 | 103 | 27 |
| 3 | 112,0 | 1303 | 3,7 | 4,2 | 153 | 4,0 | 430 | 101 | |
| 4 | 111,5 | 1305 | 4,3 | 4,3 | 154 | 3,9 | 460 | 102 | |
| 5 | 111,7 | 1323 | 4,0 | 4,4 | 155 | 4,0 | 460 | 108 | 31 |
| 6 | 112,1 | 1330 | 3,6 | 4,4 | 155 | 3,7 | 465 | 109 | |
| 7 | 111,3 | 1371 | 4,0 | 4,3 | 154 | 4,0 | 500 | 106 | |
| 8 | 111,0 | 1350 | 4,5 | 4,2 | 153 | 3,9 | 469 | 105 | 32 |

**c) Feeding proportions (%)**

| | **Sulfuric acid** | | | **Ammonia** | | | **Water** | |
|---|---|---|---|---|---|---|---|---|
| **N° of sample** | **Reaction tank** | **Tubular reactor** | **Stripping columns** | **Reaction tank** | **Tubular reactor** | **Granulator** | **Reaction tank** | **Tubular reactor** |
| 1 | 39 | 48 | 13 | 45 | 45 | 10 | 94 | 6 |
| 2 | 39 | 48 | 13 | 44 | 44 | 12 | 94 | 6 |
| 3 | 39 | 48 | 13 | 43 | 46 | 11 | 94 | 6 |
| 4 | 40 | 48 | 12 | 44 | 45 | 11 | 94 | 6 |
| 5 | 42 | 47 | 11 | 43 | 47 | 10 | 93 | 7 |
| 6 | 40 | 46 | 14 | 49 | 43 | 8 | 97 | 3 |
| 7 | 41 | 44 | 15 | 43 | 45 | 12 | 98 | 2 |
| 8 | 41 | 43 | 16 | 43 | 46 | 11 | 99 | 1 |

**d) Chemical - physical properties of product**

| **N° of sample** | **Nitrogen cont.(%b.w.)** | **Sulfur cont.(%b.w.)** | **Free moist (%b.w.)** | **pH 1%b.w**. | **Granulom. (%b.w.)***^{**1**} | **Hardness (%b.w.)***^{**2**} | **SGN** | **UI** | **Tendency to agglomerate (kg)** |
|---|---|---|---|---|---|---|---|---|---|
| 1 | 20,44 | | 0,17 | | | | | | |
| 2 | 20,54 | | 0,10 | 3,5 | 0,2-2,8-91,5-5,5 | 7,6-8,8-6,3 | 286 | 52 | 0 |
| 3 | 20,55 | 23,26 | 0,10 | | | | | | |
| 4 | 20,53 | | 0,08 | | | | | | 0 |
| 5 | 20.47 | | 0,09 | 3,6 | 0-2,6-91,6-5,8 | 5,8-9,0-4,1 | 286 | 51 | |
| 6 | 20,58 | 23,30 | 0,09 | | | | | | |
| 7 | 20,45 | | 0,10 | | | | | | |
| 8 | 20,63 | | 0,08 | 3,7 | 0-1,3-86,7-12,0 | 5,1-6,7-3,7 | 281 | 49 | 0 |

| | | | | | | | | | |
|---|---|---|---|---|---|---|---|---|---|
| *1 : st number : % b.w. granules with diameter greater than 4.5 mm 2nd number: % b.w. granules with diameter between 4 and 4,5 mm 3rd number : % b.w. granules with diameter between 2 and 4 mm 4th number : % b.w. granules with diameter less than 2 mm | | | | | | | | | |
| *2 : 1st number : average value 2nd number: maximum value 3rd number : minimum value | | | | | | | | | |

## Claims

1. Production method for granular ammonium sulphate, using a combination of by :
a. The reaction of sulphuric acid of more than 70 % concentration by weight with liquid or gaseous ammonia, with the simultaneous addition of recycled water acidified by sulphuric acid in a cylindrical reaction tank fitted with co-axial agitators and in a serially positioned tubular reactor.
b. The fact that the addition of raw materials and acidified recycled water takes place in both the reaction tank and in the tubular reactor.

2. Production method as described in claim 1, **characterised by** the fact that the reaction in the cylindrical tank takes place at a temperature of 100-120°C and at normal atmospheric pressure.

3. Production method as described in claim 1, **characterised by** the fact that the reaction in the cylindrical tank takes place at a temperature of 108-115 °C and at normal atmospheric pressure.

4. Production method as described in claims 1 and 2, **characterised by** the fact that the liquor produced in the reaction tank has a moisture level of 34-42 % by weight and a density of 1260-1430 g/l, measured at the reaction temperature.

5. Production method as described in claims 1 and 3, **characterised by** the fact that the liquor produced in the reaction tank has a moisture level of 34-42 % by weight and a density of 1290-1370 g/l, measured at the reaction temperature.

6. Production method as described in claim 1, **characterised by** the fact that the liquor produced in the reaction tank has a pH of 2.5 - 6.

7. Production method as described in claim 1, **characterised by** the fact that the liquor produced in the reaction tank has a pH of 3 - 5 .

8. Production method as described in claim 1, **characterised by** the fact that the liquor produced in the reaction tank ends up in an intermediate vessel, to which may be added liquid effluents from other production units or other plants and from which it is pumped into a tubular reactor.

9. Production method as described in claims 1 and 8, **characterised by** the fact that the reaction in the tubular reactor takes place at a pressure of 3 - 6 bar and a temperature above 130°C.

10. Production method as described in claims 1 and 8, **characterised by** the fact that the reaction in the tubular reactor takes place at a pressure of 3.5 - 5 bar and a temperature above 130°C.

11. Production method as described in claim 1, **characterised by** the fact that the liquor from the tubular reactor - with a moisture level of 5 - 12 % by weight, is projected into a rotating granulator to which ammonia is added in either liquid or gaseous form.

12. Production method as described in claim 11, **characterised by** the fact that the solid product leaving the granulator has a pH, measured in a 1% by weight solution, from 3 to 5 and a moisture level of 2 to 4.5 % by weight.

13. Production method as described in claim 1, **characterised by** the fact that the solid product leaving the granulator has a pH, measured in a 1% by weight solution, from 3.2 to 4.5 and a moisture level of 2 to 4.5 % by weight.

14. Production method as described in claim 1, **characterised by** the fact that the liquid or gaseous ammonia added to the cylindrical reaction tank amounts to 37-55 % by weight of the total quantity of ammonia added.

15. Production method as described in claim 1, **characterised by** the fact that the liquid or gaseous ammonia added to the tubular reactor amounts to 42 - 52 % by weight of the total quantity of ammonia added.

16. Production method as described in claim 1, **characterised by** the fact that the liquid or gaseous ammonia added to the granulator amounts to 3-11 % by weight of the total quantity of ammonia added.

17. Production method as described in claims 1,14,15 and 16, **characterised by** the fact that the acidified recycled water added to the reactor tank and the tubular reactor is first sprayed through the tail gas stripping columns, where it absorbs and neutralises the gaseous ammonia that may have remained in the reaction tank, the tubular reactor and the granulator, turning it into a solution of acidic ammonium sulphate.

18. Production method as described in claim 1, **characterised by** the fact that the sulphuric acid added to the reaction tank amounts to 31-45 % by weight of the total quantity of acid added.

19. Production method as described in claim 1, **characterised by** the fact that the sulphuric acid added to the tubular reactor amounts to 42-52 % by weight of the total quantity of acid added.

20. Production method as described in claims 1 and 17, **characterised by** the fact that the sulphuric acid added to the stripping columns to capture the tail gases amounts to 10-20% by weight of the total quantity of acid added.

21. Production method as described in claims 1,17 and 20, **characterised by** the fact that the acidified (by sulphuric acid) recycled water that exits the stripping columns and is fed into the reaction tank amounts to 89-95 % by weight of the total quantity of recycled water added.

22. Production method as described in claims 1,17 and 20, **characterised by** the fact that the acidified (by sulphuric acid) recycled water that exits the stripping columns and is fed into the tubular reactor amounts to 5-11 % by weight of the total quantity of recycled water added.

23. Production method as described in claim 12, **characterised by** the fact that the product produced in the granulate is dried in a rotary oven with a concurrent flow of exhaust gases, with a temperature of 440-480 °C at the entrance of the oven.

24. Production method as described in claims 12 and 23, **characterised by** the fact that the product produced in the granulator is dried in a rotary oven with a concurrent flow of exhaust gases, with a temperature at the entrance of the oven that may reach 500 °C.

25. Production method as described in claims 12, 23 and 24, **characterised by** the fact that the product produced in the granulator is dried in a rotary oven with an exit temperature of 95 - 110 °C.

26. Production method as described in claims 12, 23 and 24, **characterised by** the fact that the product produced in the granulator is dried in a rotary oven with an exit temperature of 98 - 110 °C.

27. Production method as described in claims 25 and 26, **characterised by** the fact that the product produced in the granulator is fed into a system of sieves such that at the end of the system at least 90 % by weight of the grains have a diameter between 2 and 4.5 mm.

28. Production method as described in claim 27, **characterised by** the fact that the commercial product leaving the sieves is air-cooled on a fluidized bed, exiting at a temperature of 10 - 45 °C whereafter it is coated with a suitable substance to prevent grains from agglomerating.

29. Production method as described in claims 1 to and including 28, **characterised by** the fact that the total amount of energy absorbed for a single production line amounts to 30 - 40 kwh per ton of product.

30. Production method as described in claims 1 to and including 29, **characterised by** the fact that the total amount of energy absorbed for a single production line amounts to 1800 - 2200 kwh per hour of operation.

31. Production method as described in claims 1 to and including 30, **characterised by** the fact that the level of production for a single production line may reach 65 t/hr.

32. Product in the form of granular ammonium sulphate produced according to claims 1 to and including 31, **characterised by** :
a. The fact that it is free-flowing and non agglomerating
b. Its nitrogen content of more than 20.5 % by weight, entirely in the form of ammonium
c. Its free moisture content, which does not exceed 0.3 % by weight
d. The pH of a 1 % solution by weight, which lies between 3.2 and 4.5

33. Product produced according to claims 1 to and including 22 and claims 27 and 31, **characterised by** the fact that at least 90% by weight of grains have a diameter of between 2 and 4.5 mm.

34. Product produced according to claims 1 to and including 22 and claims 27 and 31, **characterised by** the fact that 87-95% by weight of grains have a diameter of between 2 and 4 mm.

35. Product according to claim 32 **characterised by** the hardness of the grains, which has an average value of 3 kg at least, a maximum value of 5 kg at least, and a minimum value of 2 kg at least.

36. Product according to claim 32, **characterised by** the hardness of the grains, which have an average value usually superior to 4 kg, a maximum value usually superior to 5.5 kg and a minimum value usually superior to 3 kg.

37. Product according to claim 32, **characterised by** the flexibility of having a SGN ranging from 200 to 300 and a UI of 50 to 55, according to requirements.

38. Product according to claim 32, **characterised by** its low agglomeration tendency, which does not exceed 0.3kg, determined by an original method, which measures the applied weight necessary to crush a sample of 30gr of product that has been centrifuged at 4500rpm for 4 hours and then left for another 4 hours. The method is repeated once and the final value is defined as the average of the two results.

39. Product according to claim 32, **characterised by** the fact that it usually has an agglomeration tendency of 0 kg, determined by the original method described in claim 38.

## Patentansprüche

1. Produktionsmethode für granulöses Ammoniumsulfat unter Verwendung einer Kombination aus:
a) Der Reaktion von Schwefelsäure mit einer Konzentration von über 70% nach Gewichtsanteil mit flüssigem oder gasförmigem Ammoniak unter gleichzeitiger Hinzufügung von recyceltem, mit Schwefelsäure angesäuertem Wasser, in einem zylindrischen Reaktionsbehälter, der mit koaxialen Rührapparaten ausgestattet ist, und in einem in Reihe angeordneten Tubularreaktor.
b) Der Tatsache, dass die Hinzufügung der Rohstoffe und des angesäuerten Wassers sowohl im Reaktionsbehälter, als auch im Tubularreaktor erfolgt.

2. Produktionsmethode, wie unter Anspruch 1 beschrieben, die durch die Tatsache gekennzeichnet ist, dass die Reaktion in dem zylindrischen Behälter bei einer Temperatur von 100-120 °C und bei normalem Luftdruck erfolgt.

3. Produktionsmethode, wie unter Anspruch 1 beschrieben, die durch die Tatsache gekennzeichnet ist, dass die Reaktion in dem zylindrischen Behälter bei einer Temperatur von 108-115 °C und bei normalem Luftdruck erfolgt.

4. Produktionsmethode, wie unter Anspruch 1 und 2 beschrieben, die durch die Tatsache gekennzeichnet ist, dass die in dem Reaktionsbehälter hergestellte Flüssigkeit einen Feuchtigkeitsgehalt von 34-42% vom Gesamtgewicht und eine Dichte (gemessen bei Reaktionstemperatur) von 1260-1430 g/l hat.

5. Produktionsmethode, wie unter Anspruch 1 und 3 beschrieben, die durch die Tatsache gekennzeichnet ist, dass die in dem Reaktionsbehälter hergestellte Flüssigkeit einen Feuchtigkeitsgehalt von 34-42% vom Gesamtgewicht und eine Dichte (gemessen bei Reaktionstemperatur) von 1290-1370 g/l hat.

6. Produktionsmethode, wie unter Anspruch 1 beschrieben, die durch die Tatsache gekennzeichnet ist, dass die im Reaktionsbehälter hergestellte Flüssigkeit einen pH-Wert von 2.5 - 6 hat.

7. Produktionsmethode, wie unter Anspruch 1 beschrieben, die durch die Tatsache gekennzeichnet ist, dass die im Reaktionsbehälter hergestellte Flüssigkeit einen pH-Wert von 3 - 5 hat.

8. Produktionsmethode, wie unter Anspruch 1 beschrieben, die durch die Tatsache gekennzeichnet ist, dass die im Reaktionsbehälter erzeugte Flüssigkeit in einen Zwischenbehälter gelangt, in den auch Flüssigkeiten aus anderen Produktionseinheiten oder anderen Anlagen eingeleitet werden können, wovon sie weiter in einen Tubularreaktor gepumpt wird.

9. Produktionsmethode, wie unter Anspruch 1 und 8 beschrieben, die durch die Tatsache gekennzeichnet ist, dass die Reaktion im Tubularreaktor bei einem Druck von 3 - 6 bar und einer Temperatur von über 130 °C stattfindet.

10. Produktionsmethode, wie unter Anspruch 1 und 8 beschrieben, die durch die Tatsache gekennzeichnet ist, dass die Reaktion im Tubularreaktor bei einem Druck von 3.5 -5 bar und einer Temperatur von über 130 °C stattfindet.

11. Produktionsmethode, wie unter Anspruch 1 beschrieben, die durch die Tatsache gekennzeichnet ist, dass die Flüssigkeit aus dem Tubularreaktor - mit einem Feuchtigkeitsanteil von 5 - 12 % vom Gesamtgewicht - in einen Rotationsgranulator geleitet wird, in den Ammoniak in flüssiger oder gasförmiger Form hinzugefügt wird.

12. Produktionsmethode, wie unter Anspruch 11 beschrieben, die durch die Tatsache gekennzeichnet ist, dass das feste Produkt, das den Granulator verlässt, einen pH-Wert von 3 bis 5, gemessen in einer 1-prozentigen Lösung nach Gewichtsanteil, und einen Feuchtigkeitsanteil von 2 bis 4.5% vom Gesamtgewicht hat.

13. Produktionsmethode, wie unter Anspruch 11 beschrieben, die durch die Tatsache gekennzeichnet ist, dass das feste Produkt, das den Granulator verlässt, einen pH-Wert von 3.2 bis 4.5, gemessen in einer 1-prozentigen Lösung nach Gewichtsanteil, und einen Feuchtigkeitsanteil von 2 bis 4. 5% vom Gesamtgewicht hat.

14. Produktionsmethode, wie unter Anspruch 1 beschrieben, die durch die Tatsache gekennzeichnet ist, dass das in den zylindrischen Reaktionsbehälter geleitete flüssige oder gasförmige Ammoniak einen gewichtmäßigen Anteil von 37 - 55% des insgesamt hinzugefügten Ammoniaks ausmacht.

15. Produktionsmethode, wie unter Anspruch 1 beschrieben, die durch die Tatsache gekennzeichnet ist, dass das in den Tubularreaktor geleitete flüssige oder gasförmige Ammoniak einen gewichtmäßigen Anteil von 42 - 52% des insgesamt hinzugefügten Ammoniaks ausmacht.

16. Produktionsmethode, wie unter Anspruch 1 beschrieben, die durch die Tatsache gekennzeichnet ist, dass das in den Granulator geleitete flüssige oder gasförmige Ammoniak einen gewichtmäßigen Anteil von 3 - 11% des insgesamt hinzugefügten Ammoniak ausmacht.

17. Produktionsmethode, wie unter Anspruch 1, 14, 15 und 16 beschrieben, die durch die Tatsache gekennzeichnet ist, dass das angesäuerte, recycelte Wasser, das in den Reaktionsbehälter und den Tubularreaktor geleitet wird, zuerst durch die Abgas-Waschsäulen gesprüht wird, wo es das im Reaktionsbehälter, dem Tubularreaktor und dem Granulator verbliebenen gasförmigen Ammoniak absorbiert und neutralisiert und zu einer sauren Ammoniumsulfat-Lösung umwandelt.

18. Produktionsmethode, wie unter Anspruch 1 beschrieben, die durch die Tatsache gekennzeichnet ist, dass die in den Reaktionsbehälter eingeleitete Schwefelsäure einen gewichtmäßigen Anteil von 31 - 45 % der insgesamt hinzugefügten Schwefelsäure ausmacht.

19. Produktionsmethode, wie unter Anspruch 1 beschrieben, die durch die Tatsache gekennzeichnet ist, dass die in den Tubularreaktor eingeleitete Schwefelsäure einen gewichtmäßigen Anteil von 42 - 52 % der insgesamt hinzugefügten Schwefelsäure ausmacht.

20. Produktionsmethode, wie unter Anspruch 1 und 17 beschrieben, die durch die Tatsache gekennzeichnet ist, dass die in den Austauschsäulen für die Absorption der Abgase hinzugefügte Schwefelsäure einen gewichtmäßigen Anteil von 10 - 20% der insgesamt hinzugefügten Schwefelsäure ausmacht.

21. Produktionsmethode, wie unter Anspruch 1, 17 und 20 beschrieben, die durch die Tatsache gekennzeichnet ist, dass das (durch Schwefelsäure) angesäuerte recycelte Wasser, das aus den Waschsäulen austritt und in den Reaktionsbehälter geleitet wird, einen gewichtmäßigen Anteil von 89 - 95 % des insgesamt hinzugefügten recycelten Wassers ausmacht.

22. Produktionsmethode, wie unter Anspruch 1, 17 und 20 beschrieben, die durch die Tatsache gekennzeichnet ist, dass das (durch Schwefelsäure) angesäuerte recycelte Wasser, das aus den Waschsäulen austritt und in den Tubularreaktor geleitet wird, einen gewichtmäßigen Anteil von 5 - 11 % des insgesamt hinzugefügten recycelten Wassers ausmacht.

23. Produktionsmethode, wie unter Anspruch 12 beschrieben, die durch die Tatsache gekennzeichnet ist, dass das im Granulator hergestellte Produkt in einem Rotationstrockner mit einem Parallelstrom von Abgasen bei einer Temperatur von 440 - 480 °C am Eingang des Ofens getrocknet wird.

24. Produktionsmethode, wie unter Anspruch 12 und 23 beschrieben, die durch die Tatsache gekennzeichnet ist, dass das im Granulator hergestellte Produkt in einem Rotationstrockner mit einem Parallelstrom von Abgasen bei einer Temperatur getrocknet wird, die am Ofeneingang 500 °C erreichen kann.

25. Produktionsmethode, wie unter Anspruch 12, 23 und 24 beschrieben, die durch die Tatsache gekennzeichnet ist, dass das im Granulator hergestellte Produkt in einem Rotationstrockner mit einer Ausgangstemperatur von 95 - 110 °C getrocknet wird.

26. Produktionsmethode, wie unter Anspruch 12, 23 und 24 beschrieben, die durch die Tatsache gekennzeichnet ist, dass das im Granulator hergestellte Produkt in einem Rotationstrockner mit einer Ausgangstemperatur von 98 - 110 °C getrocknet wird.

27. Produktionsmethode, wie unter Anspruch 25 und 26 beschrieben, die durch die Tatsache gekennzeichnet ist, dass das im Granulator hergestellte Produkt in ein Sieb-System eingeleitet wird, so dass am Ende des Systems gewichtmäßig mindestens 90% der Körner insgesamt einen Durchmesser zwischen 2 und 4.5 mm haben.

28. Produktionsmethode, wie unter Anspruch 27 beschrieben, die durch die Tatsache gekennzeichnet ist, dass das aus dem Siebsystem austretende kommerzielle Produkt auf einem Fließbett luftgekühlt wird und dies mit einer Temperatur von 10 - 45 °C verlässt und anschließend mit einer geeigneten Substanz beschichtet wird, so dass ein Verklumpen der Körner verhindert wird.

29. Produktionsmethode, wie unter Anspruch 1 bis einschließlich 28 beschrieben, die durch die Tatsache gekennzeichnet ist, dass die für eine einzelne Produktionsreihe absorbierte Energie 30 - 40 kWh pro Tonne Produkt beträgt.

30. Produktionsmethode, wie unter Anspruch 1 bis einschließlich 29 beschrieben, die durch die Tatsache gekennzeichnet ist, dass die für eine einzelne Produktionsreihe absorbierte Energie 1800 - 2200 kWh pro Betriebsstunde beträgt.

31. Produktionsmethode, wie unter Anspruch 1 bis einschließlich 30 beschrieben, die durch die Tatsache gekennzeichnet ist, dass die Produktionsrate einer einzelnen Produktionsreihe 65 t/h erreichen können.

32. Produkt in der Form von granulösem Ammoniumsulfat, hergestellt gemäß Anspruch 1 bis einschließlich 31, das sich auszeichnet durch:
a. Die Tatsache, dass es frei fließend ist und nicht verklumpt.
b. Einen Stickstoffanteil von mehr als 20.5% vom Gesamtgewicht, rein in der Form von Ammonium
c. Einen Gehalt an freier Feuchtigkeit von nicht mehr als 0.3% vom Gesamtgewicht.
d. Den pH-Wert einer 1-prozentigen Lösung nach Gewichtsanteil, der zwischen 3.2 und 4.5 liegt.

33. Produkt, hergestellt gemäß Anspruch 1 bis einschließlich 22 und Ansprüchen 27 und 31, das durch die Tatsache gekennzeichnet ist, dass gewichtmäßig mindestens 90% der Körner einen Durchmesser zwischen 2 und 4.5 mm haben.

34. Produkt, hergestellt gemäß Anspruch 1 bis einschließlich 22 und Ansprüchen 27 und 31, das durch die Tatsache gekennzeichnet ist, dass gewichtmäßig 87 - 95 % der Körner einen Durchmesser zwischen 2 und 4 mm haben.

35. Produkt gemäß Anspruch 32, das durch die Härte der Körner gekennzeichnet ist, die einen Durchschnittswert von mindestens 3 kg, einen Höchstwert von mindestens 5 kg und einen Mindestwert von mindestens 2 kg aufweist.

36. Produkt gemäß Anspruch 32, das durch die Härte der Körner gekennzeichnet ist, die gewöhnlich einen Durchschnittswert höher als 4 kg, einen Höchstwert von gewöhnlich höher als 5,5 kg und einen Mindestwert von gewöhnlich höher als 3 kg aufweist.

37. Produkt gemäß Anspruch 32, das durch die Flexibilität eines SGN-Bereichs von 200 bis 300 und eines UI-Bereichs von 50 bis 55, je nach Anforderungen, gekennzeichnet ist.

38. Produkt gemäß Anspruch 32, das durch seine geringe Verklumpungs-Tendenz gekennzeichnet ist, die nicht mehr als 0.3 kg beträgt, ermittelt nach einer Originalmethode, welche das Gewicht misst, das nötig ist, um eine Stichprobe von 30gr des Produktes zu zerkleinern, die bei 4500 rpm 4 Stunden lang zentrifugiert und anschließend 4 weitere Stunden ruhen gelassen wurde. Die Methode wird noch einmal wiederholt und das Endergebnis wird als der Durchschnittswert der zwei Ergebnisse definiert.

39. Produkt gemäß Anspruch 32, das durch die Tatsache gekennzeichnet ist, dass es normalerweise eine Verklumpungs-Tendenz von 0 kg aufweist, bestimmt nach der in Anspruch 38 beschriebenen Originalmethode.

## Revendications

1. Méthode de production de sulfate d'ammonium granulé, utilisant une combinaison de:
a. La réaction de l'acide sulfurique à concentration supérieure à 70 % (par poids) avec de l'ammoniac liquide ou gazeux, avec l'addition simultanée de l'eau recyclée, acidifiée par de l'acide sulfurique dans une cuve de réaction cylindrique, munie d'agitateurs coaxiaux et dans un réacteur tubulaire installé en série.
b. Le fait que l' addition des matières premières et de l'eau recyclée a lieu à la fois dans la cuve de réaction et dans le réacteur tubulaire.

2. Méthode de production telle qu'elle est décrite dans la revendication 1, **caractérisée par le fait que** la réaction dans la cuve cylindrique a lieu à une température de 100-120°C et à pression atmosphérique normale.

3. Méthode de production telle qu'elle est décrite dans la revendication 1, **caractérisée par le fait que** la réaction dans la cuve cylindrique a lieu à une température de 108-115°C et à pression atmosphérique normale.

4. Méthode de production telle qu'elle est décrite dans les revendications 1 et 2, **caractérisée par le fait que** la liqueur produite dans la cuve de réaction a une teneur en humidité de 34 - 42 % (par poids) et une densité de 1260-1430 g/l, mesurée à la température de la réaction.

5. Méthode de production telle qu'elle est décrite dans les revendications 1 et 3, **caractérisée par le fait que** la liqueur produite dans la cuve de réaction a une teneur en humidité de 34 - 42 % (par poids) et une densité de 1290-1370 g/l, mesurée à la température de la réaction.

6. Méthode de production telle qu'elle est décrite dans la revendication 1, **caractérisée par le fait que** la liqueur produite dans la cuve de réaction a un pH de 2.5 - 6.

7. Méthode de production telle qu'elle est décrite dans la revendication 1, **caractérisée par le fait que** la liqueur produite dans la cuve de réaction a un pH de 3 - 5.

8. Méthode de production telle qu'elle est décrite dans la revendication 1, **caractérisée par le fait que** la liqueur produite dans la cuve de réaction arrive dans un bac intermédiaire, dans lequel peuvent être ajoutés des effluents liquides issus d'autres ateliers de production ou installations de l' usine, d' où la liqueur est pompée vers un réacteur tubulaire.

9. Méthode de production telle qu'elle est décrite dans les revendications 1 et 8, **caractérisée par le fait que** la réaction dans le réacteur tubulaire a lieu à une pression de 3 - 6 bars et à une température supérieure à 130 °C.

10. Méthode de production telle qu'elle est décrite dans les revendications 1 et 8, **caractérisée par le fait que** la réaction dans le réacteur tubulaire a lieu à une pression de 3.5 - 5 bars et à une température supérieure à 130 °C.

11. Méthode de production telle qu'elle est décrite dans la revendication 1, **caractérisée par le fait que** la liqueur produite dans le réacteur tubulaire, ayant une teneur en humidité de 5 - 12 % (par poids), est projetée dans un granulateur rotatif, dans lequel de l'ammoniac liquide ou gazeux est ajouté.

12. Méthode de production telle qu'elle est décrite dans la revendication 11, **caractérisée par le fait que** le produit solide quittant le granulateur a un pH, mesuré dans une solution de 1 % (par poids), de 3 à 5 et une teneur en humidité de 2 à 4.5 % (par poids).

13. Méthode de production telle qu'elle est décrite dans la revendication 1, **caractérisée par le fait que** le produit solide quittant le granulateur a un pH, mesuré dans une solution de 1 % (par poids), de 3.2 à 4.5 et une teneur en humidité de 2 à 4.5 % (par poids).

14. Méthode de production telle qu'elle est décrite dans la revendication 1, **caractérisée par le fait que** l'ammoniac liquide ou gazeux ajouté dans la cuve de réaction constitue le 37 - 55 % (par poids) de la quantité totale d'ammoniac ajouté.

15. Méthode de production telle qu'elle est décrite dans la revendication 1, **caractérisée par le fait que** l'ammoniac liquide ou gazeux ajouté dans le réacteur tubulaire constitue le 42 - 52 % (par poids) de la quantité totale d'ammoniac ajouté.

16. Méthode de production telle qu'elle est décrite dans la revendication 1, **caractérisée par le fait que** l'ammoniac liquide ou gazeux ajouté dans le granulateur constitue le 3-11 % (par poids) de la quantité totale d'ammoniac ajouté.

17. Méthode de production telle qu'elle est décrite dans les revendications 1, 14, 15 et 16, **caractérisée par le fait que** l'eau recyclée, acidifiée et ajoutée dans la cuve de réaction et dans le réacteur tubulaire est d'abord injectée dans les colonnes de lavage des gaz de queue, où elle absorbe et neutralise l'ammoniac gazeux residuel provenant de la cuve de réaction, de réacteur tubulaire et de granulateur, la transformant en solution de sulfate d'ammonium acide.

18. Méthode de production telle qu'elle est décrite dans la revendication 1, **caractérisée par le fait que** l'acide sulfurique ajouté dans la cuve de réaction constitue le 31-45 % (par poids) de la quantité totale d'acide ajouté.

19. Méthode de production telle qu'elle est décrite dans la revendication 1, **caractérisée par le fait que** l'acide sulfurique ajouté dans le réacteur tubulaire constitue le 42- 52% (par poids) de la quantité totale d'acide ajouté.

20. Méthode de production telle qu'elle est décrite dans les revendications 1 et 17, **caractérisée par le fait que** l'acide sulfurique ajouté dans les colonnes de lavage pour l' assainissement des gaz de queue constitue le 10- 20% (par poids) de la quantité totale d'acide ajouté.

21. Méthode de production telle qu'elle est décrite dans les revendications 1, 17 et 20, **caractérisée par le fait que** l'eau recyclée acidifiée (par l'acide sulfurique) qui sort de colonnes de lavage et amenée dans la cuve de réaction constitue le 85- 95% (par poids) de la quantité totale de l'eau recyclée ajoutée.

22. Méthode de production telle qu'elle est décrite dans les revendications 1, 17 et 20, **caractérisée par le fait que** l'eau recyclée acidifiée (par l'acide sulfurique) qui sort de colonnes de lavage et amenée dans le reacteur tubulaire constitue le 5- 11% (par poids) de la quantité totale de l'eau recyclée ajoutée.

23. Méthode de production telle qu'elle est décrite dans la revendication 12, **caractérisée par le fait que** le produit obtenu dans le granulateur est séché dans un séchoir rotatif à cocourant des gaz chauds, avec une température de 440 - 480 °C à l'entrée du séchoir.

24. Méthode de production telle qu'elle est décrite dans les revendications 12 et 23, **caractérisée par le fait que** le produit obtenu dans le granulateur est séché dans un séchoir rotatif à cocourant des gaz chauds, avec une température pouvant atteindre les 500 °C à l'entrée du séchoir.

25. Méthode de production telle qu'elle est décrite dans les revendications 12, 13 et 24, **caractérisée par le fait que** le produit obtenu dans le granulateur est séché dans un séchoir rotatif, avec une température à la sortie de 95 -110 °C.

26. Méthode de production telle qu'elle est décrite dans les revendications 12, 13 et 24, **caractérisée par le fait que** le produit obtenu dans le granulateur est séché dans un séchoir rotatif, avec une température à la sortie de 98 -110°C.

27. Méthode de production telle qu'elle est décrite dans les revendications 25 et 26, **caractérisée par le fait que** le produit obtenu dans le granulateur est amené dans un système de tamis, de telle sorte qu'à la sortie du système, au moins 90 % (par poids) des granules ont un diamètre situé entre 2 et 4.5 mm.

28. Méthode de production telle qu'elle est décrite dans la revendication 27, **caractérisée par le fait que** le produit quittant les tamis est refroidi par air sur un lit fluidisé, sortant à une température de 10 - 45 °C, puis est enduit d'une substance appropriée afin d'empêcher l'agglomération des granules.

29. Méthode de production telle qu'elle est décrite dans les revendications 1 à 28 incluse, **caractérisée par le fait que** la quantité totale d'énergie absorbée par une seule ligne de production s'élève à 30 - 40 kWh par tonne de produit.

30. Méthode de production telle qu'elle est décrite dans les revendications 1 à 29 incluse, **caractérisée par le fait que** la quantité totale d'énergie absorbée par une seule ligne de production s'élève à 1800 - 2200 kWh par heure de fonctionnement.

31. Méthode de production telle qu'elle est décrite dans les revendications 1 à 30 incluse, **caractérisée par le fait que** la cadence de production pour une seule ligne de production peut atteindre les 65 t/h.

32. Produit sous la forme de sulfate d'ammonium granulé, fabriqué suivant les revendications 1 à 31 incluse, **caractérisé par**:
a. Le fait qu'il présente un écoulement libre et non aggloméré.
b. Sa teneur en azote, qui est supérieur à 20.5 % (par poids), totalement sous forme ammoniacale.
c. Sa teneur en humidité libre, qui ne dépasse pas le 0.3 % (par poids).
d. Le pH d'une solution de 1 % (par poids), qui se situe entre 3.2 et 4.5.

33. Produit obtenu suivant les revendications 1 à 22 incluse, ainsi que les revendications 27 et 31, **caractérisé par le fait qu'**au moins 90 % (par poids) des granules ont un diamètre situé entre 2 et 4.5 mm.

34. Produit obtenu suivant les revendications 1 à 22 incluse, ainsi que les revendications 27 et 31, **caractérisé par le fait que** 87 - 95 % (par poids) des granules ont un diamètre situé entre 2 et 4 mm.

35. Produit obtenu suivant la revendication 32, **caractérisé par** la dureté des granules, qui a une valeur moyenne de 3 kg au moins, une valeur maximum de 5 kg au moins et une valeur minimum de 2 kg au moins.

36. Produit obtenu suivant la revendication 32, **caractérisé par** la dureté des granules, qui a une valeur moyenne généralement supérieure à 4 kg, une valeur maximum généralement supérieure à 55 kg et une valeur minimum généralement supérieure à 3kg.

37. Produit obtenu suivant la revendication 32, **caractérisé par** la flexibilité d' avoir un SGN situé entre 200 à 300 et un UI entre 50 et 55, suivant les exigences.

38. Produit obtenu suivant la revendication 32, **caractérisé par** une tendance à une faible agglomération, qui n'excède pas les 0.3 kg, déterminée par une méthode originale, qui mesure le poids qui devrait être exercé pour écraser un échantillon de 30 gr du produit ayant été centrifugé à 4500 rpm pendant 4 heures et laissé se reposer à la suite pendant 4 heures. Cette méthode est répétée encore une fois et la valeur finale est définie comme la moyenne des deux résultats.

39. Produit obtenu suivant la revendication 32, **caractérisé par le fait qu'**il a habituellement une tendance à l'agglomération de 0 kg, déterminée par la méthode originale décrite dans la revendication 38.
